# EUROPEAN PATENT SPECIFICATION

(11) **EP 2 932 876 B1**
(45) Date of publication and mention of the grant of the patent: **18.10.2017**
(21) Application number: 13861253.6
(22) Date of filing: 06.12.2013
(51) Int. Cl.: A47L 1/02, G05D 1/02

(54) **WINDOW CLEANING ROBOT AND OPERATION MODE CONTROL METHOD THEREOF**
FENSTERREINIGUNGSROBOTER UND BETRIEBSMODUSSTEUERUNGSVERFAHREN DAFÜR
ROBOT DE NETTOYAGE DE VITRE ET PROCÉDÉ DE COMMANDE DE MODE DE FONCTIONNEMENT DE CELUI-CI

(30) Priority: 07.12.2012 CN 201210520479
(43) Date of publication of application: 21.10.2015
(73) Proprietor: Ecovacs Robotics Co., Ltd., Suzhou, Jiangsu 215168 (CN)
(72) Inventor: TANG, Jinju, Suzhou Jiangsu 215168 (CN); ZHANG, Xiaojun, Suzhou City, Jiangsu 215168 (CN)
(74) Representative: Angerhausen, Christoph
(86) International application number: PCT/CN2013/088749
(87) International publication number: WO 2014/086312

(56) References cited:
- WO-A1-2012/005404
- CN-A- 101 259 000
- CN-A- 102 591 340
- CN-A- 102 591 340
- CN-A- 102 591 341
- CN-A- 102 591 341
- CN-U- 202 515 581
- KR-A- 20060 014 715
- US-A1- 2005 166 355

## Description

### Field of the Invention

The present invention belongs to the technical field of manufacturing of intelligent robot, and relates to a glass-wiping robot and an operation mode control method thereof.

### Background art

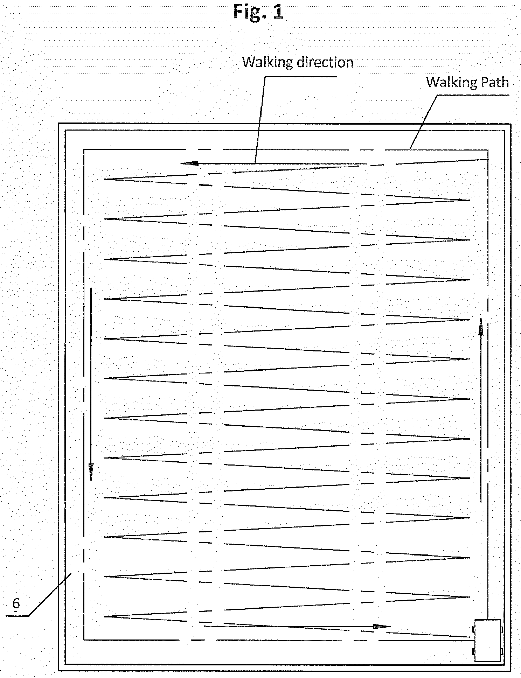

In daily life, when a glass is large enough, generally, the glass-wiping device cleans the glass in a 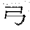 -shaped cleaning operation mode and then cleans the glass near the surrounding window frame in an along-side cleaning operation mode, as shown in Fig. 1, hereby cleaning the glass evenly and avoid any omission of cleaning. However, when the glass-wiping robot works on a small glass where there is no sufficient turning space for the robot, it would take much time on turning in case of the 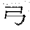 -shaped cleaning operation mode, and thus results in a low working efficiency. CN 1 02 591 340 describes an operation mode control method of a glass-wiping robot according the the method claims 1 to 3.

### Summary of the Invention

To eliminate the above deficiencies in the prior art, firstly, the present application provides an operation mode control method of a glass-wiping robot in which the corresponding operation modes are selected according to the actual conditions of the glass to be cleaned.

Secondly, the present invention further provides a glass-wiping robot adopting the above operation mode control method so as to improve the working efficiency.

The technical problem to be solved in the present application is solved by the following technical solutions:
An operation mode control method of a glass-wiping robot comprises the following steps:
   Step 1: the glass-wiping robot walks from a starting point O towards the side of a glass in a first axial direction;
   Step 2: when a rangefinder measures that an instant distance S1 from an instant position of the glass-wiping robot to the starting point O is greater than or equal to a predetermined value M2, a control unit stores a1 and Step 6 starts; otherwise, the glass-wiping robot keeps walking until it reaches an edge point P on the side of the glass;
   Step 3: the glass-wiping robot rotates by 180 degrees and walks towards the other side of the glass in a direction opposite to the first axial direction;
   Step 4: when the rangefinder measures that an instant distance S2 from the instant position of the glass-wiping robot to the point P is greater than or equal to the predetermined value M2, the control unit stores a1 and Step 6 starts; otherwise, the glass-wiping robot keeps walking until it reaches an edge point Q on the other side of the glass;
   Step 5: when the rangefinder measures that a distance S between the points P and Q is less than a predetermined M1, the control unit controls the glass-wiping robot to send an alarm; otherwise, the control unit stores a2 and Step 6 starts;
   Step 6: the glass-wiping robot rotates by 90 degrees and walks from a rotation point O' in a second axial direction, and when the rangefinder measures that an instant distance S3 from the instant position of the glass-wiping robot to the rotation point O' is greater than or equal to a predetermined value M3, the glass-wiping robot performs a large-area cleaning mode or a small-area cleaning mode correspondingly according to a1 or a2; otherwise, the glass-wiping robot keeps walking until it reaches an edge point X on the side of the glass;
   Step 7: the glass-wiping robot rotates by 180 degrees and walks towards the other side of the glass in a direction opposite to the second axial direction;
   Step 8: when the rangefinder measures that an instant distance S4 from the instant position of the glass-wiping robot to the point X is greater than or equal to the predetermined value M3, the glass-wiping robot performs the large-area cleaning mode or the small-area cleaning mode correspondingly according to a1 or a2; otherwise, the glass-wiping robot keeps walking until it reaches an edge point Y on the other side of the glass, and the control unit controls the glass-wiping robot to send an alarm.

Another operation mode control method of a glass-wiping robot comprises the following steps:
Step 1: the glass-wiping robot walks from a starting point O towards the side of a glass in a first axial direction;
Step 2: when a rangefinder measures that an instant distance from an instant position of the glass-wiping robot to the starting point O is greater than or equal to a predetermined value M3, Step 5 starts; otherwise, the glass-wiping robot keeps walking until it reaches an edge point P on the side of the glass;
Step 3: the glass-wiping robot rotates by 180 degrees and walks towards the other side of the glass in a direction opposite to the first axial direction;
Step 4: when the rangefinder measures that an instant distance from the instant position of the glass-wiping robot to the point P is greater than or equal to the predetermined value M3, Step 5 starts; otherwise, the control unit controls the glass-wiping robot to send an alarm;
Step 5: the glass-wiping robot rotates by 90 degrees and walks from a rotation point O" in a second axial direction;
Step 6: when the rangefinder measures that an instant distance from the instant position of the glass-wiping robot to the rotation point O" is greater than or equal to a predetermined value M2, the glass-wiping robot performs a large-area cleaning mode; otherwise, the glass-wiping robot keeps walking until it reaches an edge point X on the side of the glass;
Step 7: the glass-wiping robot rotates by 180 degrees and walks towards the other side of the glass in a direction opposite to the second axial direction;
Step 8: when the rangefinder measures that an instant distance from the instant position of the glass-wiping robot to the point X is greater than or equal to the predetermined value M2, the glass-wiping robot performs the large-area cleaning mode; otherwise, the glass-wiping robot keeps walking until it reaches an edge point Y on the other side of the glass, and when the rangefinder measures that a distance between the points X and Y is less than a predetermined value M1, the control unit controls the glass-wiping robot to send an alarm; otherwise, the glass-wiping robot performs a small-area cleaning mode.

The third operation mode control method of a glass-wiping robot comprises the following steps:
Step 1: the glass-wiping robot walks from a starting point O towards the side of a glass in a first axial direction;
Step 2: when a rangefinder measures that an instant distance S1 from an instant position of the glass-wiping robot to the starting point O is greater than or equal to a predetermined value M2, Step 6 starts; otherwise, the glass-wiping robot keeps walking until it reaches an edge point P on the side of the glass;
Step 3: the glass-wiping robot rotates by 180 degrees and walks towards the other side of the glass in a direction opposite to the first axial direction;
Step 4: when the rangefinder measures that an instant distance S2 from the instant position of the glass-wiping robot to the point P is greater than or equal to the predetermined value M2, Step 6 starts; otherwise, the glass-wiping robot keeps walking until it reaches an edge point Q on the other side of the glass;
Step 5: when the rangefinder measures that a distance S between the points P and Q is less than a predetermined M1, the control unit controls the glass-wiping robot to send an alarm; otherwise, the glass-wiping robot enters a small-area cleaning mode;
Step 6: the glass-wiping robot rotates by 90 degrees and walks in a second axial direction from a rotation point O', and when the rangefinder measures that an instant distance S3 from the instant position of the glass-wiping robot to the rotation point O' is greater than or equal to a predetermined value M3, the glass-wiping robot performs a large-area cleaning mode; otherwise, the glass-wiping robot keeps walking until it reaches an edge point X on the side of the glass;
Step 7: the glass-wiping robot rotates by 180 degrees and walks towards the other side of the glass in a direction opposite to the second axial direction;
Step 8: when the rangefinder measures that an instant distance S4 from the instant position of the glass-wiping robot to the point X is greater than or equal to the predetermined value M3, the glass-wiping robot performs the large-area cleaning mode; otherwise, the glass-wiping robot keeps walking until it reaches an edge point Y on the other side of the glass, and the control unit controls the glass-wiping robot to send an alarm.

In the third operation mode control method of the glass-wiping robot described above, the small-area cleaning mode in Step 5 comprises the following steps:
Step 5.1: the glass-wiping robot rotates by 90 degrees and walks in the second axial direction from the point Q until it reaches the edge point X on the side of the glass;
Step 5.2: the glass-wiping robot rotates by 180 degrees and walks towards the other side of the glass in the direction opposite to the second axial direction until it reaches the edge point Y on the other side of the glass;
Step 5.3: when the rangefinder measures that a distance between the points X and Y is less than or equal to the predetermined value M3, the glass-wiping robot sends an alarm or stops walking; otherwise, the glass-wiping robot keeps performing an along-side walking cleaning mode.

Specifically, the first axial direction is horizontal direction or vertical direction, and the second axial direction is vertical direction or horizontal direction.

Depending on the size of the glass-wiping robot, the predetermined value M1 is 40∼50cm, the predetermined value M2 is 51∼65 cm, and the predetermined value M3 is 60∼80 cm.

Specifically, the large-area cleaning mode is one or any combination of 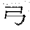 -shaped cleaning mode, along-side cleaning mode, spiral walking cleaning mode and random walking cleaning mode of the glass-wiping robot.

The small-area cleaning mode is along-side walking cleaning mode of the glass-wiping robot; or the small-area cleaning mode is Z-shaped or 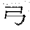 -shaped walking cleaning mode.

According to requirements, the rangefinder is an encoder or a gyroscope; and the glass-wiping robot detects its arrival at the edge of the glass by an ultrasonic sensor or a border detection member.

The present invention provides a glass-wiping robot comprising a control unit, a driving unit, a walking unit, an adsorption device and a cleaning unit and adopting any one of the above operation mode control methods of the glass-wiping robot.

Here, storing a1 means that the control unit controls the glass-wiping robot to be ready to enter the large-area cleaning mode, and storing a2 means that the control unit controls the glass-wiping robot to be ready to enter the small-area cleaning mode.

The operation mode control methods of the glass-wiping robot provided by the present invention can determine the operation mode of the glass-wiping robot according to the detected size of the glass, hereby improving the working efficiency of the glass-wiping robot.

### Description of accompanying drawings

Fig. 1 is a diagram illustrating the movement of a glass-wiping robot in a large-area cleaning mode in the prior art;
Fig. 2 is a diagram illustrating the control flow of a glass-wiping robot of the present invention.
Fig. 3 is a flow diagram illustrating the first embodiment of the operation mode control method of the glass-wiping robot of the present invention.
Fig. 4 is a diagram illustrating the walking path in the first embodiment of operation mode control method of the glass-wiping robot of the present invention.

Description of reference numbers in the figures:

| | | |
|---|---|---|
| 1. Adsorption device | 2. Walking unit | 3. Cleaning unit |
| 4. Drive unit | 5. Control unit | 6. Glass |
| 7. Rangefinder | | |

### Detailed Description of Preferred Embodiments

Hereinafter, the operation mode control method of the glass-wiping robot of the present invention will be further described with reference to the accompanying drawings and embodiments.

### First Embodiment

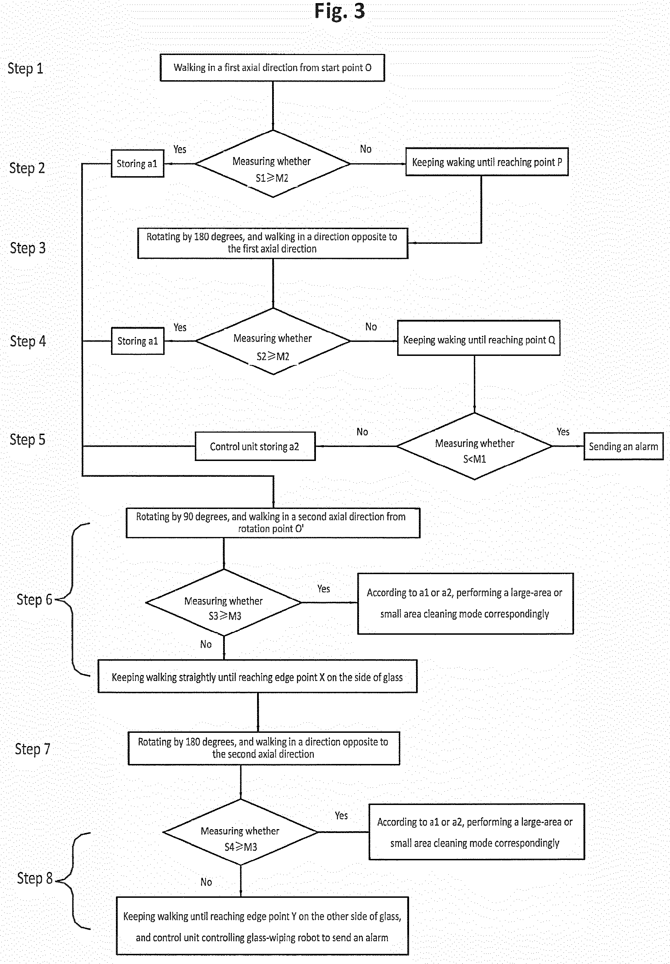

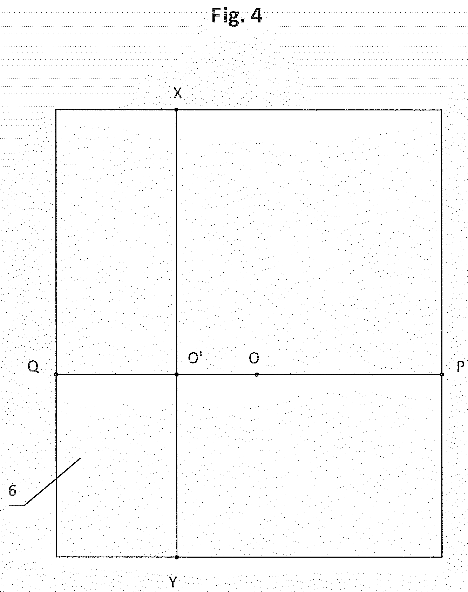

As shown in Figs. 3 and 4, the operation mode control method of the glass-wiping robot of the present invention comprises the following steps:
Step 1: the glass-wiping robot walks from a starting point O towards the side of a glass 6 in a first axial direction;
Step 2: when a rangefinder measures that an instant distance S1 from an instant position of the glass-wiping robot to the starting point O is greater than or equal to a predetermined value M2, a control unit 5 stores a1, and Step 6 starts; otherwise, the glass-wiping robot keeps walking until it reaches an edge point P on the side of the glass 6;
Step 3: the glass-wiping robot rotates by 180 degrees and walks towards the other side of the glass 6 in a direction opposite to the first axial direction;
Step 4: when the rangefinder 7 measures that an instant distance S2 from the instant position of the glass-wiping robot to the point P is greater than or equal to the predetermined value M2, the control unit 5 stores a1 and Step 6 starts; otherwise, the glass-wiping robot keeps walking until it reaches an edge point Q on the other side of the glass 6;
Step 5: when the rangefinder 7 measures that a distance S between the points P and Q is less than a predetermined M1, the control unit 5 controls the glass-wiping robot to send an alarm; otherwise, the control unit 5 stores a2 and Step 6 starts, wherein storing a1 means that the control unit 5 controls the glass-wiping robot to be ready to enter a large-area cleaning mode, and storing a2 means that the control unit 5 controls the glass-wiping robot to be ready to enter the small-area cleaning mode;
Step 6: the glass-wiping robot rotates by 90 degrees and walks from a rotation point O' in a second axial direction, and when the rangefinder 7 measures that an instant distance S3 from the instant position of the glass-wiping robot to the rotation point O' is greater than or equal to a predetermined value M3, according to a1 or a2, the glass-wiping robot performs the large-area cleaning mode or the small-area cleaning mode correspondingly; otherwise, the glass-wiping robot keeps walking until it reaches an edge point X on the side of the glass 6;
Step 7: the glass-wiping robot rotates by 180 degrees and walks towards the other side of the glass 6 in a direction opposite to the second axial direction;
Step 8: when the rangefinder 7 measures that an instant distance S4 from the instant position of the glass-wiping robot to the point X is greater than or equal to the predetermined value M3, according to a1 or a2, the glass-wiping robot performs the large-area cleaning mode or the small-area cleaning mode correspondingly; otherwise, the glass-wiping robot keeps walking until it reaches an edge point Y on the other side of the glass 6, and the control unit controls the glass-wiping robot to send an alarm.

In the first embodiment, whether the small-area cleaning mode is performed or not is determined according to the length of the glass in the first axial direction. The glass-wiping robot measures the glass in the first axial direction and then measures the glass in the second axial direction. For example, the glass-wiping robot measures the horizontal direction length of the glass and then measures the vertical direction length of the glass. Finally, according to the measurement result, the glass-wiping robot selectively performs the corresponding operation modes or sends an alarm.

In fact, the glass-wiping robot needs to determine the size of the glass according to both the lengths of the glass in the first and second axial directions. Specifically, when the length of the glass in the first axial direction is between M1 and M2 and the length of the glass in the second axial direction is greater than M3, the glass-wiping robot determines the glass as a small-area glass and performs the small-area cleaning mode correspondingly. When the length of the glass in the first axial direction is larger than or equal to M2 and the length of the glass in the second axial direction is larger than or equal to M3, the glass-wiping robot determines the glass as a large-area glass and performs the large-area cleaning mode correspondingly. In addition, when the length of the glass in the first axial direction is less than or equal to M1 or the length of the glass in the second axial direction is less than M3, the glass-wiping robot sends an alarm to inform the user that the glass is too small to be suitable for the operation of the glass-wiping robot. In particular, in the case where whether the small-area cleaning mode is performed or not is determined according to the length of the glass in the first axial direction, the glass-wiping robot is required to store a1 or a2 correspondingly after measuring the length of the glass in the first axial direction, and then rotate by 90 degrees to further measure the length of the glass in the second axial direction. If the glass-wiping robot does not operate as required above, it cannot recognize whether the length of the glass in the first axial direction is greater than or equal to M2 or is between M1 and M2 before it rotates by 90 degrees to turn to the second axial direction.

### Second Embodiment

The operation mode control method of the glass-wiping robot of the present invention comprises the following steps:
Step 1: the glass-wiping robot walks from a starting point O towards the side of the glass 6 in a first axial direction;
Step 2: when a rangefinder 7 measures that an instant distance from an instant position of the glass-wiping robot to the starting point O is greater than or equal to a predetermined value M3, Step 5 starts; otherwise, the glass-wiping robot keeps walking until it reaches an edge point P on the side of the glass 6;
Step 3: the glass-wiping robot rotates by 180 degrees and walks towards the other side of the glass 6 in a direction opposite to the first axial direction;
Step 4: when the rangefinder 7 measures that an instant distance from the instant position of the glass-wiping robot to the point P is greater than or equal to the predetermined value M3, Step 5 starts; otherwise, the control unit 5 controls the glass-wiping robot to send an alarm;
Step 5: the glass-wiping robot rotates by 90 degrees and walks from a rotation point O" in a second axial direction;
Step 6: when the rangefinder 7 measures that an instant distance from the instant position of the glass-wiping robot to the rotation point O" is greater than or equal to a predetermined value M2, the glass-wiping robot performs a large-area cleaning mode; otherwise, the glass-wiping robot keeps walking until it reaches an edge point X on the side of the glass 6;
Step 7: the glass-wiping robot rotates by 180 degrees and walks towards the other side of the glass 6 in a direction opposite to the second axial direction;
Step 8: when the rangefinder 7 measures that an instant distance from the instant position of the glass-wiping robot to the point X is greater than or equal to the predetermined value M2, the glass-wiping robot performs the large-area cleaning mode; otherwise, the glass-wiping robot keeps walking until it reaches an edge point Y on the other side of the glass 6. When the rangefinder 7 measures that the distance between the points X and Y is less than a predetermined value M1, the control unit 5 controls the glass-wiping robot to send an alarm; otherwise, the glass-wiping robot performs a small-area cleaning mode.

In the second embodiment, whether the small-area cleaning mode is performed or not is determined according to the length of the glass in the second axial direction. The glass-wiping robot measures the glass in the first axial direction, and then measures the glass in the second axial direction. For example, the glass-wiping robot measures the vertical direction length of the glass and then measures the horizontal direction length of the glass. Hereafter, according to the measurement result, the glass-wiping robot selectively performs the corresponding operation modes or sends an alarm.

In fact, the glass-wiping robot still needs to determine the size of the glass according to both the lengths of the glass in the first and second axial directions. Specifically, when the length of the glass in the second axial direction is between M1 and M2 and the length of the glass in the first axial direction is greater than M3, the glass-wiping robot determines such a size of glass as a small-area glass and performs the small-area cleaning mode correspondingly. When the length of the glass in the second axial direction is larger than or equal to M2 and the length of the glass in the first axial direction is larger than or equal to M3, the glass-wiping robot determines such a size of glass as a large-area glass and performs the large-area cleaning mode correspondingly. In addition, when the length of the glass in the second axial direction is less than or equal to M1 or the length of the glass in the first axial direction is less than M3, the glass-wiping robot sends an alarm to inform the user that the glass is too small to be suitable for the operation of the glass-wiping robot. In particular, in a case where whether the small-area cleaning mode is performed or not is determined according to the length of the glass in the second axial direction, the glass-wiping robot preferentially measures the length of the glass in the first axial direction, and then directly enters the small-area cleaning mode when the length of the glass in the second axial direction is determined as being between M1 and M2 or directly enters the large-area cleaning mode when the length of the glass in the second axial direction is determined as being larger than or equal to M2.

### Third Embodiment

The operation mode control method of the glass-wiping robot of the present invention comprises the following steps:
Step 1: the glass-wiping robot walks from a starting point O towards the side of a glass 6 in a first axial direction;
Step 2: when a rangefinder 7 measures that an instant distance S1 from an instant position of the glass-wiping robot to the starting point O is greater than or equal to a predetermined value M2, Step 6 starts; otherwise, the glass-wiping robot keeps walking until it reaches an edge point P on the side of the glass 6;
Step 3: the glass-wiping robot rotates by 180 degrees and walks towards the other side of the glass 6 in a direction opposite to the first axial direction;
Step 4: when the rangefinder 7 measures that an instant distance S2 from the instant position of the glass-wiping robot to the point P is greater than or equal to the predetermined value M2, Step 6 starts; otherwise, the glass-wiping robot keeps walking until it reaches an edge point Q on the other side of the glass 6;
Step 5: when the rangefinder 7 measures that a distance S between the points P and Q is less than a predetermined M1, the control unit 5 controls the glass-wiping robot to send an alarm; otherwise, the glass-wiping robot enters a small-area cleaning mode;
Step 6: the glass-wiping robot rotates by 90 degrees and walks in a second axial direction from a rotation point O', and when the rangefinder 7 measures that an instant distance S3 from the instant position of the glass-wiping robot to the rotation point O' is greater than or equal to a predetermined value M3, the glass-wiping robot performs a large-area cleaning mode; otherwise, the glass-wiping robot keeps walking until it reaches an edge point X on the side of the glass 6;
Step 7: the glass-wiping robot rotates by 180 degrees and walks towards the other side of the glass 6 in a direction opposite to the second axial direction;
Step 8: when the rangefinder 7 measures that an instant distance S4 from the instant position of the glass-wiping robot to the point X is greater than or equal to the predetermined value M3, the glass-wiping robot performs the large-area cleaning mode; otherwise, the glass-wiping robot keeps walking until it reaches an edge point Y on the other side of the glass 6, and the control unit 5 controls the glass-wiping robot to send an alarm.

Here, the small-area cleaning mode in Step 5 comprises the following steps:
Step 5.1: the glass-wiping robot rotates by 90 degrees and walks in the second axial direction from the point Q until it reaches the edge point X on the side of the glass 6;
Step 5.2: the glass-wiping robot rotates by 180 degrees and walks towards the other side of the glass in the direction opposite to the second axial direction until it reaches the edge point Y on the other side of the glass 6;
Step 5.3: when the rangefinder 7 measures that a distance between the points X and Y is less than or equal to M3, the glass-wiping robot sends an alarm or stops walking; otherwise, the glass-wiping robot keeps performing an along-side walking cleaning mode.

Compared with the first embodiment, in this embodiment, the glass-wiping robot directly performs the small-area cleaning mode when it determines that the length of the glass in the first axial direction is between M1 and M2, wherein the small-area cleaning mode is the along-side walking cleaning mode. Then, the glass-wiping robot sends an alarm when it determines that the length of the glass in the second axial direction is less than M3; otherwise, the glass-wiping robot keeps performing the along-side walking cleaning mode.

The control method of the third embodiment is relatively simple. In Steps 2 and 4 of the first embodiment, the control unit 5 needs to store a1. In Steps 6 and 8, if the instant distance is greater than or equal to the predetermined value M3, the glass-wiping robot needs to perform the large-area cleaning mode or the small-area cleaning mode correspondingly according to a1 or a2 stored in the control unit 5. However, in Steps 2 and 4 of the third embodiment, the control unit 5 does not need to store a1, thus in Steps 6 and 8, the glass-wiping robot directly performs the large-area cleaning mode if the instant distance is larger than or equal to the predetermined value M3.

In the first to third embodiments, preferably, the first and the second axial directions are perpendicular to each other. For example, if the first axial direction is the horizontal direction or vertical direction, the second axial direction is the vertical direction or horizontal direction correspondingly. When the glass-wiping robot walks on a vertical glass surface, it is easy to determine the horizontal direction or vertical direction by a dual-axis accelerometer.

The operation mode is divided into the large-area operation mode and the small-area operation mode. In the first embodiment, storing a1 means that the control unit controls the glass-wiping robot to be ready to enter the large-area cleaning mode, and storing a2 means that the control unit controls the glass-wiping robot to be ready to enter the small-area cleaning mode.

The large-area cleaning mode mainly includes the following cleaning modes: Z-shaped or 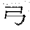 -shaped cleaning followed by along-side cleaning; or spiral walking cleaning; or random walking cleaning; or one or any combination of Z-shaped or 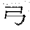 -shaped cleaning, spiral walking cleaning, random walking cleaning and along-side cleaning. For example, the large-area cleaning mode may be Z-shaped or 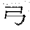 -shaped cleaning followed by random walking cleaning and then along-side cleaning; or may be random walking cleaning followed by Z-shaped or 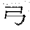 -shaped cleaning; also may be spiral walking cleaning followed by random walking cleaning, etc. Preferably, the large-area cleaning mode performs Z-shaped or 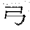 -shaped cleaning or the spiral walking cleaning or the random walking cleaning, and then performs along-side cleaning.

The small-area cleaning mode mainly includes the following cleaning modes: along-side walking cleaning mode; or Z-shaped/ 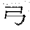 -shaped walking cleaning mode.

It should be particularly emphasized that the large-area and small-area cleaning modes of the present invention are not limited to the cleaning modes listed above. In order to reduce invalid turnings or multiple turnings in a small glass and to traverse the whole small glass, the along-side walking cleaning mode of the small-area cleaning mode may be a cleaning in four sides of the glass or a cleaning only in some of the sides of the glass. Further, on a small glass, even if the glass-wiping robot performs one or two rounds of Z-shaped or 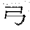 -shaped walking, the small glass can be better traversed. The Z-shaped/ 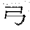 -shaped walking and along-side cleaning are described in detail in the Chinese Patent Application (Application No: 201110020059.3), and are not described herein.

In the control unit, the predetermined values M1, M2 and M3 are respectively set to be 40∼50 cm, 51∼65 cm and 60∼80 cm according to the actual size of the glass-wiping robot and the size of the turning radius. The glass-wiping robot measures the length of the glass by a rangefinder in which an encoder or a gyroscope is used to measure the actual walking distance of the robot by calculating the rotation times of a wheel.

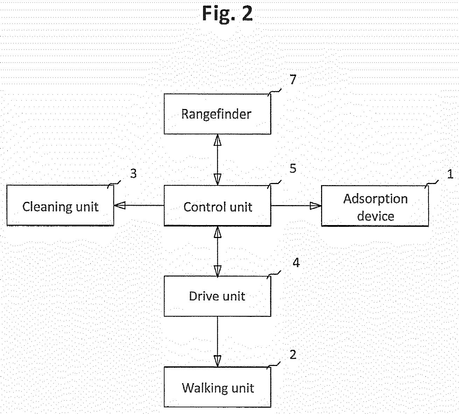

As shown in Fig. 2, the present invention also provides a glass-wiping robot comprising a control unit 5, a driving unit 4, a walking unit 2, an adsorption device 1 and a cleaning unit 3. Specifically, the control unit 5 drives the walking unit 2 to walk by the driving unit 4. Depending on the actual application with or without control on the cleaning unit 2 or the adsorption device 1, the control unit selectively connects or does not connect to the cleaning unit 2 or the adsorption device 1. By utilizing any of the operation mode control methods of the above first to third embodiments, the glass-wiping robot determines the operation mode of the glass-wiping robot according to the measured size of the glass, and thus can avoid invalid turnings or reduce multiple turnings, hereby improving the working efficiency of the glass-wiping robot.

The glass-wiping robot of the present invention in which the control unit controls the driving unit to drive the walking unit to walk and which is adsorbed on the glass by the adsorption device belongs to the prior art, and will not be described in detail herein. The glass-wiping robot detects its arrival at the edge of the glass by an ultrasonic sensor or a border detection member. When the glass is a framed glass, the glass-wiping robot can sense the frame of the glass by a collision plate so as to determine its arrival at the frame; and when the glass is a frameless glass, the glass-wiping robot may detect the border of the glass by an ultrasonic sensor or a border detection member. The method for detecting the border of the glass using an ultrasonic sensor has been disclosed in the Chinese Patent Application (Application No: 201210217419.3) and the method for detecting the border of the glass by a border detection member has been disclosed in the Chinese Patent Application (Application No: 201210097812.3), which will not be described in detail herein.

## Claims

1. An operation mode control method of a glass-wiping robot, **characterized in that**, comprising the following steps:
Step 1: the glass-wiping robot walks from a starting point O towards the side of a glass in a first axial direction; **characterized by** the further steps:
Step 2: when a rangefinder measures that an instant distance S1 from an instant position of the glass-wiping robot to the starting point O is greater than or equal to a predetermined value M2, a control unit stores a1 and Step 6 starts; otherwise, the glass-wiping robot keeps walking until it reaches an edge point P on the side of the glass;
Step 3: the glass-wiping robot rotates by 180 degrees and walks towards the other side of the glass in a direction opposite to the first axial direction;
Step 4: when the rangefinder measures that an instant distance S2 from the instant position of the glass-wiping robot to the point P is greater than or equal to the predetermined value M2, the control unit stores a1 and Step 6 starts; otherwise, the glass-wiping robot keeps walking until it reaches an edge point Q on the other side of the glass;
Step 5: when the rangefinder measures that a distance S between the points P and Q is less than a predetermined M1, the control unit controls the glass-wiping robot to send an alarm; otherwise, the control unit stores a2 and Step 6 starts;
Step 6: the glass-wiping robot rotates by 90 degrees and walks from a rotation point O' in a second axial direction, and when the rangefinder measures that an instant distance S3 from the instant position of the glass-wiping robot to the rotation point O' is greater than or equal to a predetermined value M3, the glass-wiping robot performs a large-area cleaning mode or a small-area cleaning mode correspondingly according to a1 or a2; otherwise, the glass-wiping robot keeps walking until it reaches an edge point X on the side of the glass;
Step 7: the glass-wiping robot rotates by 180 degrees and walks towards the other side of the glass in a direction opposite to the second axial direction;
Step 8: when the rangefinder measures that an instant distance S4 from the instant position of the glass-wiping robot to the point X is greater than or equal to the predetermined value M3, the glass-wiping robot performs the large-area cleaning mode or the small-area cleaning mode correspondingly according to a1 or a2; otherwise, the glass-wiping robot keeps walking until it reaches an edge point Y on the other side of the glass, and the control unit controls the glass-wiping robot to send an alarm.

2. An operation mode control method of a glass-wiping robot, **characterized in that**, comprising the following steps:
Step 1: the glass-wiping robot walks from a starting point O towards the side of a glass in a first axial direction; **characterized by** the further steps:
Step 2: when a rangefinder measures that an instant distance from an instant position of the glass-wiping robot to the starting point O is greater than or equal to a predetermined value M3, Step 5 starts; otherwise, the glass-wiping robot keeps walking until it reaches an edge point P on the side of the glass;
Step 3: the glass-wiping robot rotates by 180 degrees and walks towards the other side of the glass in a direction opposite to the first axial direction;
Step 4: when the rangefinder measures that an instant distance from the instant position of the glass-wiping robot to the point P is greater than or equal to the predetermined value M3, Step 5 starts; otherwise, the control unit controls the glass-wiping robot to send an alarm;
Step 5: the glass-wiping robot rotates by 90 degrees and walks from a rotation point O" in a second axial direction;
Step 6: when the rangefinder measures that an instant distance from the instant position of the glass-wiping robot to the rotation point O" is greater than or equal to a predetermined value M2, the glass-wiping robot performs a large-area cleaning mode; otherwise, the glass-wiping robot keeps walking until it reaches an edge point X on the side of the glass;
Step 7: the glass-wiping robot rotates by 180 degrees and walks towards the other side of the glass in a direction opposite to the second axial direction;
Step 8: when the rangefinder measures that an instant distance from the instant position of the glass-wiping robot to the point X is greater than or equal to the predetermined value M2, the glass-wiping robot performs the large-area cleaning mode; otherwise, the glass-wiping robot keeps walking until it reaches an edge point Y on the other side of the glass, and when the rangefinder measures that a distance between the points X and Y is less than a predetermined value M1, the control unit controls the glass-wiping robot to send an alarm; otherwise, the glass-wiping robot performs a small-area cleaning mode.

3. An operation mode control method of a glass-wiping robot, **characterized in that**, comprises the following steps:
Step 1: the glass-wiping robot walks from a starting point O towards the side of a glass in a first axial direction; **characterized by** the further steps:
Step 2: when a rangefinder measures that an instant distance S1 from an instant position of the glass-wiping robot to the starting point O is greater than or equal to a predetermined value M2, Step 6 starts; otherwise, the glass-wiping robot keeps walking until it reaches an edge point P on the side of the glass;
Step 3: the glass-wiping robot rotates by 180 degrees and walks towards the other side of the glass in a direction opposite to the first axial direction;
Step 4: when the rangefinder measures that an instant distance S2 from the instant position of the glass-wiping robot to the point P is greater than or equal to the predetermined value M2, Step 6 starts; otherwise, the glass-wiping robot keeps walking until it reaches an edge point Q on the other side of the glass;
Step 5: when the rangefinder measures that a distance S between the points P and Q is less than a predetermined M1, the control unit controls the glass-wiping robot to send an alarm; otherwise, the glass-wiping robot enters a small-area cleaning mode;
Step 6: the glass-wiping robot rotates by 90 degrees and walks in a second axial direction from a rotation point 0', and when the rangefinder measures that an instant distance S3 from the instant position of the glass-wiping robot to the rotation point O' is greater than or equal to a predetermined value M3, the glass-wiping robot performs a large-area cleaning mode; otherwise, the glass-wiping robot keeps walking until it reaches an edge point X on the side of the glass;
Step 7: the glass-wiping robot rotates by 180 degrees and walks towards the other side of the glass in a direction opposite to the second axial direction;
Step 8: when the rangefinder measures that an instant distance S4 from the instant position of the glass-wiping robot to the point X is greater than or equal to the predetermined value M3, the glass-wiping robot performs the large-area cleaning mode; otherwise, the glass-wiping robot keeps walking until it reaches an edge point Y on the other side of the glass, and the control unit controls the glass-wiping robot to send an alarm.

4. The operation mode control method of claim 3, **characterized in that**, the small-area cleaning mode in Step 5 comprises the following steps:
Step 5.1: the glass-wiping robot rotates by 90 degrees and walks in the second axial direction from the point Q until it reaches the edge point X on the side of the glass;
Step 5.2: the glass-wiping robot rotates by 180 degrees and walks towards the other side of the glass in the direction opposite to the second axial direction until it reaches the edge point Y on the other side of the glass;
Step 5.3: when the rangefinder measures that a distance between the points X and Y is less than or equal to the predetermined value M3, the glass-wiping robot sends an alarm or stops walking; otherwise, the glass-wiping robot keeps performing an along-side walking cleaning mode.

5. The operation mode control method of any one of claims 1-3, **characterized in that**, the first axial direction is horizontal direction or vertical direction, and the second axial direction is vertical direction or horizontal direction.

6. The operation mode control method of any one of claims 1-3, **characterized in that**, the predetermined value M1 is 40∼50cm, the predetermined value M2 is 51∼65 cm, and the predetermined value M3 is 60∼80 cm.

7. The operation mode control method of any one of claims 1-3, **characterized in that**, the large-area cleaning mode is one or any combination of 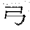 -shaped cleaning mode, along-side cleaning mode, spiral walking cleaning mode and random walking cleaning mode of the glass-wiping robot.

8. The operation mode control method of any one of claims 1-3, **characterized in that**, the small-area cleaning mode is along-side walking cleaning mode of the glass-wiping robot; or the small-area cleaning mode is Z-shaped or 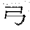 -shaped walking cleaning mode.

9. The operation mode control method of any one of claims 1-3, **characterized in that**, the rangefinder is an encoder or a gyroscope.

10. The operation mode control method of claim 1, **characterized in that**, the glass-wiping robot detects its arrival at the edge of the glass by an ultrasonic sensor or a border detection member.

11. A glass-wiping robot comprising a control unit, a driving unit, a walking unit, an adsorption device and a cleaning unit, **characterized in that**, the glass-wiping robot adopts the operation mode control method of the glass-wiping robot according to any one of claims 1-3.

## Patentansprüche

1. Betriebsart-Steuerungsverfahren eines Glaswischroboters, **dadurch gekennzeichnet, dass** es die folgenden Schritte umfasst:
Schritt 1: Der Glaswischroboter läuft von einem Ausgangspunkt 0 zur Seite eines Glases in einer ersten Axialrichtung; **gekennzeichnet durch** die weiteren Schritte:
Schritt 2: Wenn ein Entfernungsmesser misst, dass ein momentaner Abstand S1 von einer momentanen Position des Glaswischroboters zum Ausgangspunkt 0 größer oder gleich einem vorgegebenen Wert M2 ist, speichert eine Steuerungseinheit a1 und Schritt 6 beginnt; andernfalls läuft der Glaswischroboter weiter, bis er einen Kantenpunkt P an der Seite des Glases erreicht;
Schritt 3: Der Glaswischroboter dreht sich um 180 Grad und läuft zur anderen Seite des Glases in einer Richtung entgegen der ersten Axialrichtung;
Schritt 4: Wenn der Entfernungsmesser misst, dass ein momentaner Abstand S2 von der momentanen Position des Glaswischroboters zum Punkt P größer oder gleich dem vorgegebenen Wert M2 ist, speichert die Steuerungseinheit a1 und Schritt 6 beginnt; andernfalls läuft der Glaswischroboter weiter, bis er einen Kantenpunkt Q an der anderen Seite des Glases erreicht;
Schritt 5: Wenn der Entfernungsmesser misst, dass ein Abstand S zwischen den Punkten P und Q kleiner als ein vorgegebenes M1 ist, steuert die Steuerungseinheit den Glaswischroboter so, dass er einen Alarm sendet; andernfalls speichert die Steuerungseinheit a2 und Schritt 6 beginnt;
Schritt 6: Der Glaswischroboter dreht sich um 90 Grad und läuft von einem Drehpunkt O' in einer zweiten Axialrichtung, und wenn der Entfernungsmesser misst, dass ein momentaner Abstand S3 von der momentanen Position des Glaswischroboters zum Drehpunkt O' größer oder gleich einem vorgegebenen Wert M3 ist, führt der Glaswischroboter einen Großflächenreinigungsmodus oder einen Kleinflächenreinigungsmodus dementsprechend gemäß a1 oder a2 aus; andernfalls läuft der Glaswischroboter weiter, bis er einen Kantenpunkt X an der Seite des Glases erreicht;
Schritt 7: Der Glaswischroboter dreht sich um 180 Grad und läuft zur anderen Seite des Glases in einer Richtung entgegen der zweiten Axialrichtung;
Schritt 8: Wenn der Entfernungsmesser misst, dass ein momentaner Abstand S4 von der momentanen Position des Glaswischroboters zum Punkt X größer oder gleich dem vorgegebenen Wert M3 ist, führt der Glaswischroboter den Großflächenreinigungsmodus oder den Kleinflächenreinigungsmodus dementsprechend gemäß a1 oder a2 aus; andernfalls läuft der Glaswischroboter weiter, bis er einen Kantenpunkt Y an der anderen Seite des Glases erreicht, und die Steuerungseinheit steuert den Glaswischroboter so, dass er einen Alarm sendet.

2. Betriebsart-Steuerungsverfahren eines Glaswischroboters, **dadurch gekennzeichnet, dass** es die folgenden Schritte umfasst:
Schritt 1: Der Glaswischroboter läuft von einem Ausgangspunkt 0 zur Seite eines Glases in einer ersten Axialrichtung; **gekennzeichnet durch** die weiteren Schritte:
Schritt 2: Wenn ein Entfernungsmesser misst, dass ein momentaner Abstand von einer momentanen Position des Glaswischroboters zum Ausgangspunkt 0 größer oder gleich einem vorgegebenen Wert M3 ist, beginnt Schritt 5; andernfalls läuft der Glaswischroboter weiter, bis er einen Kantenpunkt P an der Seite des Glases erreicht;
Schritt 3: Der Glaswischroboter dreht sich um 180 Grad und läuft zur anderen Seite des Glases in einer Richtung entgegen der ersten Axialrichtung;
Schritt 4: Wenn der Entfernungsmesser misst, dass ein momentaner Abstand von der momentanen Position des Glaswischroboters zum Punkt P größer oder gleich dem vorgegebenen Wert M3 ist, beginnt Schritt 5; andernfalls steuert die Steuerungseinheit den Glaswischroboter so, dass er einen Alarm sendet;
Schritt 5: Der Glaswischroboter dreht sich um 90 Grad und läuft von einem Drehpunkt O" in eine zweite Axialrichtung; Schritt 6: Wenn der Entfernungsmesser misst, dass ein momentaner Abstand von der momentanen Position des Glaswischroboters zum Drehpunkt O" größer oder gleich einem vorgegebenen Wert M2 ist, führt der Glaswischroboter einen Großflächenreinigungsmodus aus; andernfalls läuft der Glaswischroboter weiter, bis er einen Kantenpunkt X an der Seite des Glases erreicht;
Schritt 7: Der Glaswischroboter dreht sich um 180 Grad und läuft zur anderen Seite des Glases in einer Richtung entgegen der zweiten Axialrichtung;
Schritt 8: Wenn der Entfernungsmesser misst, dass ein momentaner Abstand von der momentanen Position des Glaswischroboters zum Punkt X größer oder gleich dem vorgegebenen Wert M2 ist, führt der Glaswischroboter den Großflächenreinigungsmodus aus; andernfalls läuft der Glaswischroboter weiter, bis er einen Kantenpunkt Y an der anderen Seite des Glases erreicht, und wenn der Entfernungsmesser misst, dass ein Abstand zwischen den Punkten X und Y kleiner als ein vorgegebener Wert M1 ist, steuert die Steuerungseinheit den Glaswischroboter so, dass er einen Alarm sendet; andernfalls führt der Glaswischroboter einen Kleinflächenreinigungsmodus aus.

3. Betriebsart-Steuerungsverfahren eines Glaswischroboters, **dadurch gekennzeichnet, dass** es die folgenden Schritte umfasst:
Schritt 1: Der Glaswischroboter läuft von einem Ausgangspunkt 0 zur Seite eines Glases in einer ersten Axialrichtung; **gekennzeichnet durch** die weiteren Schritte:
Schritt 2: Wenn ein Entfernungsmesser misst, dass ein momentaner Abstand S1 von einer momentanen Position des Glaswischroboters zum Ausgangspunkt 0 größer oder gleich einem vorgegebenen Wert M2 ist, beginnt Schritt 6; andernfalls läuft der Glaswischroboter weiter, bis er einen Kantenpunkt P an der Seite des Glases erreicht;
Schritt 3: Der Glaswischroboter dreht sich um 180 Grad und läuft zur anderen Seite des Glases in einer Richtung entgegen der ersten Axialrichtung;
Schritt 4: Wenn der Entfernungsmesser misst, dass ein momentaner Abstand S2 von der momentanen Position des Glaswischroboters zum Punkt P größer oder gleich dem vorgegebenen Wert M2 ist, beginnt Schritt 6; andernfalls läuft der Glaswischroboter weiter, bis er einen Kantenpunkt Q an der anderen Seite des Glases erreicht;
Schritt 5: Wenn der Entfernungsmesser misst, dass ein Abstand S zwischen den Punkten P und Q kleiner als ein vorgegebenes M1 ist, steuert die Steuerungseinheit den Glaswischroboter so, dass er einen Alarm sendet; andernfalls geht der Glaswischroboter in den Kleinflächenreinigungsmodus;
Schritt 6: Der Glaswischroboter dreht sich um 90 Grad und läuft in einer zweiten Axialrichtung von einem Drehpunkt O', und wenn der Entfernungsmesser misst, dass ein momentaner Abstand S3 von der momentanen Position des Glaswischroboters zum Drehpunkt O' größer oder gleich einem vorgegebenen Wert M3 ist, führt der Glaswischroboter einen Großflächenreinigungsmodus aus; andernfalls läuft der Glaswischroboter weiter, bis er einen Kantenpunkt X an der Seite des Glases erreicht;
Schritt 7: Der Glaswischroboter dreht sich um 180 Grad und läuft zur anderen Seite des Glases in einer Richtung entgegen der zweiten Axialrichtung;
Schritt 8: Wenn der Entfernungsmesser misst, dass ein momentaner Abstand S4 von der momentanen Position des Glaswischroboters zum Punkt X größer oder gleich dem vorgegebenen Wert M3 ist, führt der Glaswischroboter den Großflächenreinigungsmodus aus; andernfalls läuft der Glaswischroboter weiter, bis er einen Kantenpunkt Y an der anderen Seite des Glases erreicht und die Steuerungseinheit steuert den Glaswischroboter so, dass er einen Alarm sendet.

4. Betriebsart-Steuerungsverfahren nach Anspruch 3, **dadurch gekennzeichnet, dass** der Kleinflächenreinigungsmodus in Schritt 5 die folgenden Schritte umfasst:
Schritt 5.1: der Glaswischroboter dreht sich um 90 Grad und läuft in die zweite Axialrichtung vom Punkt Q, bis er den Kantenpunkt X an der Seite des Glases erreicht;
Schritt 5.2: Der Glaswischroboter dreht sich um 180 Grad und läuft zur anderen Seite des Glases in der Richtung entgegen der zweiten Axialrichtung, bis er den Kantenpunkt Y an der anderen Seite des Glases erreicht;
Schritt 5.3: Wenn der Entfernungsmesser misst, dass ein Abstand zwischen den Punkten X und Y kleiner oder gleich dem vorgegebenen Wert M3 ist, sendet der Glaswischroboter einen Alarm oder kommt zum Stillstand; andernfalls setzt der Glaswischroboter die Ausführung eines Längsseitenlauf-Reinigungsmodus fort.

5. Betriebsart-Steuerungsverfahren nach einem der Ansprüche 1-3, **dadurch gekennzeichnet, dass** die erste Axialrichtung die horizontale Richtung oder vertikale Richtung ist, und die zweite Axialrichtung die vertikale Richtung oder horizontale Richtung ist.

6. Betriebsart-Steuerungsverfahren nach einem der Ansprüche 1-3, **dadurch gekennzeichnet, dass** der vorgegebene Wert M1 40∼50cm beträgt, der vorgegebene Wert M2 51∼65 cm beträgt, und der vorgegebene Wert M3 60∼80 cm beträgt.

7. Betriebsart-Steuerungsverfahren nach einem der Ansprüche 1-3, **dadurch gekennzeichnet, dass** der Großflächenreinigungsmodus ein oder eine beliebige Kombination aus dem 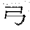 -förmigen Reinigungsmodus, Längsseiten-Reinigungsmodus, Spirallauf-Reinigungsmodus und Zufallslauf-Reinigungsmodus des Glaswischroboters ist.

8. Betriebsart-Steuerungsverfahren nach einem der Ansprüche 1-3, **dadurch gekennzeichnet, dass** der Kleinflächenreinigungsmodus der Längsseitenlauf-Reinigungsmodus des Glaswischroboters ist; oder der Kleinflächenreinigungsmodus der Z-förmige oder 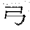 -förmige Laufreinigungsmodus ist.

9. Betriebsart-Steuerungsverfahren nach einem der Ansprüche 1-3, **dadurch gekennzeichnet, dass** der Entfernungsmesser ein Codierer oder Gyroskop ist.

10. Betriebsart-Steuerungsverfahren nach Anspruch 1, **dadurch gekennzeichnet, dass** der Glaswischroboter das Erreichen der Glaskante durch einen Ultraschallsensor oder ein Randerkennungselement erkennt.

11. Glaswischroboter, umfassend eine Steuerungseinheit, eine Antriebseinheit, eine Laufeinheit, eine Adsorptionsvorrichtung und eine Reinigungseinheit, **dadurch gekennzeichnet, dass** der Glaswischroboter das Betriebsart-Steuerungsverfahren des Glaswischroboters nach einem der Ansprüche 1 - 3 anwendet.

## Revendications

1. Procédé de commande de mode de fonctionnement d'un robot essuie-vitres, **caractérisé en ce qu'**il comprend les étapes suivantes :
étape 1 : le robot essuie-vitres marche d'un point de départ O vers le côté d'une vitre dans une première direction axiale ;
**caractérisé par** les étapes supplémentaires suivantes :
étape 2 : lorsqu'un télémètre mesure qu'une distance instantanée S1 entre une position instantanée du robot essuie-vitres et le point de départ O est supérieure ou égale à une valeur prédéterminée M2, une unité de commande stocke a1 et l'étape 6 démarre ; sinon, le robot essuie-vitres continue à marcher jusqu'à ce qu'il atteigne un point de bord P sur le côté de la vitre ;
étape 3 : le robot essuie-vitres tourne à 180 degrés et marche vers l'autre côté de la vitre dans une direction opposée à la première direction axiale ;
étape 4 : lorsque le télémètre mesure qu'une distance instantanée S2 entre la position instantanée du robot essuie-vitres et le point P est supérieure ou égale à la valeur prédéterminée M2, l'unité de commande stocke a1 et l'étape 6 démarre ; sinon, le robot essuie-vitres continue à marcher jusqu'à ce qu'il atteigne un point de bord Q de l'autre côté de la vitre ;
étape 5 : lorsque le télémètre mesure qu'une distance S entre le point P et Q est inférieure à une valeur prédéterminée M1, l'unité de commande contrôle le robot essuie-vitres afin d'envoyer une alarme ; sinon, l'unité de commande stocke a2 et l'étape 6 démarre ;
étape 6 : le robot essuie-vitres tourne à 90 degrés et marche vers un point de rotation O' dans une seconde direction axiale, et, lorsque le télémètre mesure qu'une distance instantanée S3 entre la position instantanée du robot essuie-vitres et le point de rotation O' est supérieure ou égale à une valeur prédéterminée M3, le robot essuie-vitres exécute un mode de nettoyage de grande surface ou un mode de nettoyage de petite surface selon a1 ou a2 ; sinon, le robot essuie-vitres continue à marcher jusqu'à ce qu'il atteigne un point de bord X sur le côté de la vitre ;
étape 7 : le robot essuie-vitres tourne à 180 degrés et marche vers l'autre côté de la vitre dans une direction opposée à la seconde direction axiale ;
étape 8 : lorsque le télémètre mesure qu'une distance instantanée S4 entre la position instantanée du robot essuie-vitres et le point X est supérieure ou égale à la valeur prédéterminée M3, le robot essuie-vitres exécute le mode de nettoyage de grande surface ou le mode de nettoyage de petite surface selon a1 ou a2 ; sinon, le robot essuie-vitres continue à marcher jusqu'à ce qu'il atteigne un point de bord Y de l'autre côté de la vitre, et l'unité de commande contrôle le robot essuie-vitres afin d'envoyer une alarme.

2. Procédé de commande de mode de fonctionnement d'un robot essuie-vitres, **caractérisé en ce qu'**il comprend les étapes suivantes :
étape 1 : le robot essuie-vitres marche d'un point de départ O vers le côté d'une vitre dans une première direction axiale ; **caractérisé par** les étapes supplémentaires suivantes :
étape 2 : lorsqu'un télémètre mesure qu'une distance instantanée entre une position instantanée du robot essuie-vitres et le point de départ O est supérieure ou égale à une valeur prédéterminée M3, l'étape 5 démarre ; sinon, le robot essuie-vitres continue à marcher jusqu'à ce qu'il atteigne un point de bord P sur le côté de la vitre ;
étape 3 : le robot essuie-vitres tourne à 180 degrés et marche vers l'autre côté de la vitre dans une direction opposée à la première direction axiale ;
étape 4 : lorsque le télémètre mesure qu'une distance instantanée entre la position instantanée du robot essuie-vitres et le point P est supérieure ou égale à la valeur prédéterminée M3, l'étape 5 démarre ; sinon, l'unité de commande contrôle le robot essuie-vitres afin d'envoyer une alarme ;
étape 5 : le robot essuie-vitres tourne à 90 degrés et marche depuis un point de rotation O" dans une seconde direction axiale ;
étape 6 : lorsque le télémètre mesure qu'une distance instantanée entre la position instantanée du robot essuie-vitres et le point de rotation O" est supérieure ou égale à une valeur prédéterminée M2, le robot essuie-vitres exécute un mode de nettoyage de grande surface ; sinon, le robot essuie-vitres continue à marcher jusqu'à ce qu'il atteigne un point de bord X sur le côté de la vitre ;
étape 7 : le robot essuie-vitres tourne à 180 degrés et marche vers l'autre côté de la vitre dans une direction opposée à la seconde direction axiale ;
étape 8 : lorsque le télémètre mesure qu'une distance instantanée entre la position instantanée du robot essuie-vitres et le point X est supérieure ou égale à la valeur prédéterminée M2, le robot essuie-vitres exécute le mode de nettoyage de grande surface ; sinon, le robot essuie-vitres marche jusqu'à ce qu'il atteigne un point de bord Y de l'autre côté de la vitre, et, lorsque le télémètre mesure qu'une distance entre les points X et Y est inférieure à une valeur prédéterminée M1, l'unité de commande contrôle le robot essuie-vitres afin d'envoyer une alarme ; sinon, le robot essuie-vitres exécute un mode de nettoyage de petite surface.

3. Procédé de commande de mode de fonctionnement d'un robot essuie-vitres, **caractérisé en ce qu'**il comprend les étapes suivantes :
étape 1 : le robot essuie-vitres marche d'un point de départ O vers le côté d'une vitre dans une première direction axiale ; **caractérisé par** les étapes supplémentaires suivantes :
étape 2 : lorsqu'un télémètre mesure qu'une distance instantanée S1 entre une position instantanée du robot essuie-vitres et le point de départ O est supérieure ou égale à une valeur prédéterminée M2, l'étape 6 démarre ; sinon, le robot essuie-vitres marche jusqu'à ce qu'il atteigne un point de bord P sur le côté de la vitre ;
étape 3 : le robot essuie-vitres tourne à 180 degrés et marche vers l'autre côté de la vitre dans une direction opposée à la première direction axiale ;
étape 4 : lorsque le télémètre mesure qu'une distance instantanée S2 entre la position instantanée du robot essuie-vitres et le point P est supérieure ou égale à la valeur prédéterminée M2, l'étape 6 démarre ; sinon, le robot essuie-vitres continue à marcher jusqu'à ce qu'il atteigne un point de bord Q de l'autre côté de la vitre ;
étape 5 : lorsque le télémètre mesure qu'une distance S entre les points P et Q est inférieure à une valeur prédéterminée M1, l'unité de commande contrôle le robot essuie-vitres afin d'envoyer une alarme ; sinon, le robot essuie-vitres exécute un mode de nettoyage de petite surface ;
étape 6 : le robot essuie-vitres tourne à 90 degrés et marche dans une seconde direction axiale depuis un point de rotation O', et, lorsque le télémètre mesure qu'une distance instantanée S3 entre la position instantanée du robot essuie-vitres et le point de rotation O' est supérieure ou égale à une valeur prédéterminée M3, le robot essuie-vitres exécute un mode de nettoyage de grande surface ; sinon, le robot essuie-vitres continue à marcher jusqu'à ce qu'il atteigne un point de bord X sur le côté de la vitre ;
étape 7 : le robot essuie-vitres tourne à 180 degrés et marche vers l'autre côté de la vitre dans une direction opposée à la seconde direction axiale ;
étape 8 : lorsque le télémètre mesure qu'une distance instantanée S4 entre la position instantanée du robot essuie-vitres et le point X est supérieure ou égale à la valeur prédéterminée M3, le robot essuie-vitres exécute le mode de nettoyage de grande surface ; sinon, le robot essuie-vitres continue à marcher jusqu'à ce qu'il atteigne un point de bord Y de l'autre côté de la vitre, et l'unité de commande contrôle le robot essuie-vitres afin d'envoyer une alarme.

4. Procédé de commande de mode de fonctionnement selon la revendication 3, **caractérisé en ce que** le mode de nettoyage de petite surface de l'étape 5 comprend les étapes suivantes :
étape 5.1 : le robot essuie-vitres tourne à 90 degrés et marche dans la seconde direction axiale depuis le point Q jusqu'à ce qu'il atteigne le point de bord X sur le côté de la vitre ;
étape 5.2 : le robot essuie-vitres tourne à 180 degrés et marche vers l'autre côté de la vitre dans la direction opposée à la seconde direction axiale jusqu'à ce qu'il atteigne le point de bord Y de l'autre côté de la vitre ;
étape 5.3 : lorsque le télémètre mesure qu'une distance entre les points X et Y est inférieure ou égale à la valeur prédéterminée M3, le robot essuie-vitres envoie une alarme ou arrête de marcher ; sinon, le robot essuie-vitres continue à exécuter un mode de nettoyage en marchant.

5. Procédé de commande de mode de fonctionnement selon l'une quelconque des revendications 1 à 3, **caractérisé en ce que** la première direction axiale est une direction horizontale ou une direction verticale, et la seconde direction axiale est une direction verticale ou une direction horizontale.

6. Procédé de commande de mode de fonctionnement selon l'une quelconque des revendications 1 à 3, **caractérisé en ce que** la valeur prédéterminée M1 est comprise entre 40 et 50 cm, la valeur prédéterminée M2 est comprise entre 51 et 65 cm, et la valeur prédéterminée M3 est comprise entre 60 et 80 cm.

7. Procédé de commande de mode de fonctionnement selon l'une quelconque des revendications 1 à 3, **caractérisé en ce que** le mode de nettoyage de grande surface est l'un ou n'importe quelle combinaison d'un mode de nettoyage en forme de 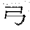 , d'un mode de nettoyage longitudinal, d'un mode de nettoyage en spirale, et d'un mode de nettoyage aléatoire du robot essuie-vitres.

8. Procédé de commande de mode de fonctionnement selon l'une quelconque des revendications 1 à 3, **caractérisé en ce que** le mode de nettoyage de petite surface est un mode de nettoyage longitudinal du robot essuie-vitres ; ou le mode de nettoyage de petite surface est un mode de nettoyage en forme de Z ou en forme de 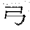 .

9. Procédé de commande de mode de fonctionnement selon l'une quelconque des revendications 1 à 3, **caractérisé en ce que** le télémètre est un encodeur ou un gyroscope.

10. Procédé de commande de mode de fonctionnement selon la revendication 1, **caractérisé en ce que** le robot essuie-vitres détecte son arrivée au niveau du bord de la vitre à l'aide d'un capteur ultrasonique ou d'un élément de détection de limite.

11. Robot essuie-vitres comprenant une unité de commande, une unité d'entraînement, une unité de déplacement, un dispositif d'adsorption et une unité de nettoyage, **caractérisé en ce que** le robot essuie-vitres adopte le procédé de commande de mode de fonctionnement du robot essuie-vitres selon l'une quelconque des revendications 1 à 3.
